Europäisches Patentamt

European Patent Office

Office européen des brevets

(19)

(11) Veröffentlichungsnummer : **0 123 843**
**B1**

(12) EUROPÄISCHE PATENTSCHRIFT

(45) Veröffentlichungstag der Patentschrift :
22.10.86

(21) Anmeldenummer : 84102788.1

(22) Anmeldetag : 14.03.84

(51) Int. Cl.⁴ : **B 60 T 17/00, B 01 D 53/26**

(54) Lufttrockner.

(30) Priorität : 30.03.83 DE 3311682

(43) Veröffentlichungstag der Anmeldung :
07.11.84 Patentblatt 84/45

(45) Bekanntmachung des Hinweises auf die Patenterteilung : 22.10.86 Patentblatt 86/43

(84) Benannte Vertragsstaaten :
AT BE DE FR GB IT NL SE

(56) Entgegenhaltungen :
EP-A- 0 036 569
DE-A- 2 253 995
DE-A- 2 904 529

(73) Patentinhaber : KNORR-BREMSE AG
Moosacher Strasse 80 Postfach 401060
D-8000 München 40 (DE)

(72) Erfinder : Ruess, Leopold
Trollblumenstrasse 19a
D-8000 München 50 (DE)
Erfinder : Unger, Hans
St. Benediktstrasse 7
D-8044 Unterschleissheim (DE)
Erfinder : Roider, Willibald
Apothekenweg 8g
D-8056 Neufahrn (DE)

## Beschreibung

Die Erfindung bezieht sich auf einen Lufttrockner für von einem Kompressor aufladbare Druckluftanlagen, insbesondere Druckluftbremsanlagen von Fahrzeugen, mit einer Lufttrocknerpatrone und einem unter dieser befindlichen Gehäuseabschnitt zur Aufnahme von Anschluß-, Steuer- und Ventileinrichtungen sowie eines integrierten Auslaßventils zum Auslaß der vom Kompressor geförderten Luft während der Kompressor-Leerlaufphasen.

Ein derartiger Lufttrockner ist beispielsweise aus der europäischen Patentanmeldung EP-A-36 569 bekannt. Dabei befindet sich unterhalb einer Lufttrocknerpatrone ein Gehäuseabschnitt, in welchem die dem Lufttrockner zugehörenden Anschluß-, Steuer- und sonstigen Ventileinrichtungen, einschließlich des Auslaßventils, untergebracht sind. Der Gehäuseabschnitt weist eine etwa dem Umfang der Lufttrocknerpatrone entsprechende Außenkontur auf und bildet in einer bevorzugten Bauform ein etwa scheibenartiges Bauteil. Der Auslaß des Auslaßventils mündet dabei unmittelbar in die Atmosphäre. Insbesondere zu Beginn einer Regenerationsphase erzeugt die so unmittelbar und plötzlich, insbesondere auch aus den Innenräumen des Lufttrockners sich zur Atmosphäre entspannende Druckluft einen lauten, störenden Expansionsknall, dem sich das Geräusch etwas beruhigter abströmender Regenerationsluft und Förderluft des Kompressors anschließt.

Für Druckluftanlagen, auch Druckluftbremsanlagen von Fahrzeugen, ist es allgemein bekannt, zur Geräuschdämpfung irgendwelche Auslässe für Druckluft mit Schalldämpfern zu versehen ; die Schalldämpfer bilden dabei gesonderte, vollständige Geräte, welche mit den Auslässen verbunden, beispielsweise in rohranschlußartig ausgebildete Auslässe eingeschraubt werden. Die Schalldämpfer erfordern hierbei einen beachtlichen Aufwand und vergrößern den Raumbedarf der mit ihnen auszurüstenden Geräte und/oder erlauben keine gesammelte Abfuhr der durch den Auslaß abströmenden Luft durch eine Entlüftungsleitung zu einer geeigneten Stelle, an welcher sie in die freie Atmosphäre entlassen wird.

Aus der DE-A-29 04 529 ist es für Luftventile von Druckluftanlagen weiterhin bekannt, in eine Abblaseöffnung des Luftventils einen Geräuschdämpfer einzusetzen, derart, daß er ein integrierter Bestandteil des Gerätes ist. Das Luftventil kann dabei auch der Wasserabscheidung dienen.

Der Erfindung liegt die Aufgabe zugrunde, einen Lufttrockner der eingangs genannten Art zu schaffen, bei welchem durch Verwendung eines Schalldämpfers sowohl der Expansionsknall beim Öffnen des Auslaßventils wie das Abströmgeräusch der während der Kompressor-Leerlaufphasen durch das Auslaßventil abströmenden Luft in ihrer Geräuschentwicklung wirksam gedämpft werden, bei welchem jedoch der Schalldämpfer einfach und billig ist und nur wenig zusätzlichen Bauraum erfordert. Dabei soll es möglich sein, bei Bedarf die während der Kompressor-Leerlaufphasen abströmende Luft vom Lufttrockner gesammelt durch eine Entlüftungsleitung zu einer für den Auslaß dieser Luft in die Atmosphäre geeigneten Stelle zu führen.

Diese Aufgabe wird nach der Erfindung dadurch gelöst, daß in dem Gehäuseabschnitt auf der der Lufttrocknerpatrone abgewandten Seite ein Expansionsschalldämpfer angeordnet ist, der in den Strömungsweg zwischen dem Auslaß des Auslaßventils und einem Gehäuseauslaß zur Atmosphäre eingeordnet ist, wobei der Gehäuseabschnitt im Bereich des Expansionsschalldämpfers einen im wesentlichen seiner Außenkontur angepaßten, umlaufenden Wandungsabschnitt aufweist, der einen zur Luftrocknerpatrone abgewandten Seite hin offenen Raum umschließt, daß der Auslaß des Auslaßventils in diesen Raum mündet und daß in diesem Raum ein Formstück gehaltert ist, das mehrere in Serie zueinander angeordnete und über Verbindungsstellen miteinander verbundene Kammern bildet, in deren erste Kammer der Auslaß einmündet und von deren letzter Kammer der rohrstutzenartig ausgebildete, mit dem Formteil einstückige Gehäuseauslaß ausgeht.

Die nach weiteren Merkmalen der Erfindung vorteilhafte Ausgestaltung des Lufttrockners ist den Unteransprüchen entnehmbar.

In der Zeichnung ist ein Ausführungsbeispiel für einen nach der Erfindung ausgebildeten Lufttrockner dargestellt, und zwar zeigt

Figur 1 einen Teillängsschnitt durch den Lufttrockner und

Figur 2 einen um 90° gedrehten Teillängsschnitt.

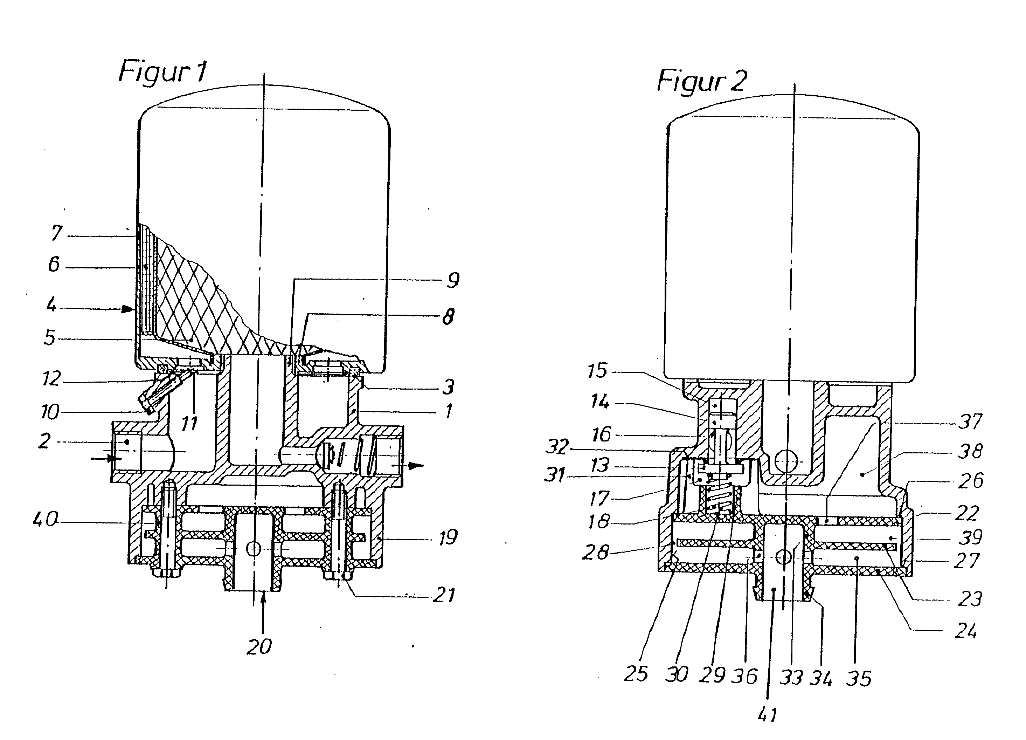

Der Lufttrockner weist einen Gehäuseabschnitt 1 auf, welcher seitlich mit Rohranschlüssen für die Druckluft- zu- und -abfuhr versehen ist ; in Fig. 1 ist ein derartiger Rohranschluß unter dem Bezugszeichen 2 ersichtlich. An seiner Oberseite weist der Gehäuseabschnitt 1 einen Flansch 3 zum dichten Aufsetzen einer Lufttrocknerpatrone 4 auf, welche im wesentlichen aus einem ein Trocknungsmittel 5 mit einem radialen Ringspalt 6 umgebenden Gehäuse 7 und einem zentrischen, unteren Anschlußstutzen 8 besteht. Mit dem Anschlußstutzen 8 ist die Lufttrocknungpatrone 4 auf einem zentrischen, den Flansch 3 überragenden, rohrstutzenartigen Teil 9 des Gehäuseabschnittes 1 aufgeschraubt. Eine mit dem Gehäuseabschnitt 1 verschraubte Schraube 10 greift zwischen Rippen 11 im Bodenblech 12 der Lufttrocknerpatrone 4 ein und sichert diese in ihrer Lage. Aus Fig. 2 ist das mit vertikaler Achsrichtung angeordnete Auslaßventil 13 ersichtlich, das von einem Kolben 14 betätigbar ist, der vom Steuerdruck in einem Raum 15 beaufschlagbar ist. Bei seiner Öffnung während Kompressor-Leerlaufphasen entläßt das Auslaßventil 13 die sich in den Räumen des Lufttrockners befindliche Druckluft und sodann die weiterhin vom nicht dargestellten Kompressor geförderte Luft aus einem Raum 16 in einen Auslaß 17.

Eine Feder 18 belastet das Auslaßventil 13 in dessen Schließrichtung. Weiterhin weist der Lufttrockner noch — wie nur zum Teil dargestellt — Kanalführungen zur funktionsgerechten Führung der Luft, ein dem dem Druckluftausgang zugeordneten Rohranschluß vorgeschaltetes Rückschlagventil, einen Druckregler zur Steuerung der Druckbeaufschlagung des Raumes 15 und gegebenenfalls eine Steuervorrichtung mit entsprechenden Steuervolumen für die Steuerung der das Trocknungsmittel 5 während der Kompressor-Leerlaufphasen durchströmenden Regenerationsluft auf.

Der Aufbau und die Funktion des Lufttrockners entspricht insoweit im wesentlichen dem Aufbau und der Funktionsweise der aus der bereits erwähnten, europäischen Patentschrift 36 569 bekannten Lufttrockners und braucht daher hier nicht wiederholt zu werden, zumal sie für die vorliegende Erfindung nicht wesentlich sind. Wesentlich für die vorliegende Erfindung ist lediglich, daß der Gehäuseabschnitt 1 das Auslaßventil 13 mit dem Auslaß 17 beinhaltet.

Der insoweit etwa scheibenartige, in seiner Außenkontur im wesentlichen dem Umfang der Lufttrocknerpatrone 4 angepaßte Gehäuseabschnitt 1 weist an seiner unteren, der Lufttrocknerpatrone 4 abgewandten Seite einen seiner Außenkontur entsprechenden, umlaufenden Wandungsabschnitt 19 auf, der schürzenartig nach unten ragt. Im vom Wandungsabschnitt 19 umschlossenen Raum befindet sich ein bevorzugt einteilig aus Kunststoff gefertigtes Formstück 20, welches durch vertikal verlaufende Schrauben 21 am Gehäuseabschnitt 1 gehalten ist. Das Formstück 20 weist drei zueinander parallel und senkrecht zum Wandungsabschnitt 19 verlaufende, zueinander vertikal versetzte Wandungsteile 22, 23 und 24 auf, von welchen das oberste Wandungsteil 22 und das unterste Wandungsteil 24 sich jeweils bis zur Innenfläche 25 des Wandungsabschnittes 19 erstrecken und dort an einer Stufe 26 bzw. 27 anliegen. Der Außenumfang des mittleren Wandungsteiles 23 steht der Innenfläche 25 mit geringem Abstand gegenüber, so daß sich zwischen beiden ein Drosselspalt 28 befindet. Unterhalb des Auslaßventils 13 weist das Formstück 20 eine nach oben offene, von einer Wandung 29 umgebene Ausnehmung 30 auf.

Die Feder 18 ragt in diese Ausnehmung 30 und steht auf deren als feste Widerlagerfläche dienendem Grund auf. Seitlich der Feder 18 weist das Formstück 20 über den Umfang der Feder 18 verteilt nach oben ragende Fortsätze 31 auf, welche mit ihrer oberen Stirnfläche eine abgedichtet in den Gehäuseabschnitt 1 eingesetzte, ringartige Ventildichtung 32 des Auslaßventils 13 in ihrer Lage halten und sichern. In ihren mittleren Zentralbereichen sind die Wandungsteile 22, 23 und 24 durch die Wandung eines in das Formteil 20 eingeformten Rohrabschnittes 33 miteinander verbunden. Der Rohrabschnitt 33 überragt nach unten das untere Wandungsteil 24 und endet mit einem zum Aufschieben eines Entlüftungsschlauches oder -rohres geeigneten Stutzen 34. Im Bereich des zwischen dem mittleren Wandungsteil 23 und dem unteren Wandungsteil 24 befindlichen Raumes 35 ist die Wandung des Rohrabschnittes 33 von Öffnungen 36 durchbrochen. Etwas vom Auslaß 17 räumlich entfernt ist das oberste Wandungsteil 22 seitlich des Rohrabschnittes 33 von Schlitzen 37 durchbrochen, welche den an den Auslaß 17 anschließenden Raum 38 oberhalb des oberen Wandungsteiles 22 mit dem Raum 39 zwischen dem oberen Wandungsteil 22 und dem mittleren Wandungsteil 23 verbindet. Die von den Schrauben 21 durchsetzten Öffnungen des Formstückes 20 sind durch in das Formstück 20 eingeformte, rohrartige Wandungsteile 40 von den Räumen 35 und 39 abgetrennt.

Die Räume 39 und 35 bilden somit innerhalb des Formstückes 20 Kammern, die zum mit dem Auslaß 17 in Verbindung stehenden Raum 38 über die Öffnung 37 in Serie geschaltet und durch den Drosselspalt 28 auch zueinander in Serie geschaltet sind, wobei an die letzte Kammer, den Raum 35, über die Öffnungen 36 der Innenraum 41 des nach unten und zur Atmosphäre hin offenen Rohrabschnittes 33 angeschlossen ist. Während der Kompressor-Leerlaufphasen strömt die vom Kompressor geförderte Luft durch den Raum 16 und das während dieser Leerlaufphasen geöffnete Auslaßventil 13 in den Raum 38, aus welchem sie durch die Öffnung 37 zum Raum 39, weiter durch den Drosselspalt 28 in den Raum 35 und durch die Öffnungen 36 in den Innenraum 41 gelangt, aus welchem die Luft schließlich zur Atmosphäre strömt. Die Luft wird somit unter mehrmaliger Umlenkung beruhigt und allmählich entspannt, so daß eine ausgezeichnete Schalldämpfung erreicht wird. Zugleich stehen der abströmenden Luft jedoch keine nennenswerten Strömungswiderstände entgegen, so daß der Kompressor in der Leerlaufphase nicht gegen einen sich durch Drosselwirkungen im Strömungsweg der auszulassenden Luft aufbauendem Gegendruck arbeiten muß und somit nicht unnötig Energie verbraucht. Hierbei ist zu beachten, daß der Drosselspalt 28 um den ganzen, großen Außenumfang des Wandungsteiles 23 umläuft und somit ebenfalls einen großen Durchströmungsquerschnitt bietet, also keine Drosselwirkung auf die auszulassende Luft ausübt. Auch die Dämpfungswirkung des Kunststoff-Materials des Formstückes 20 wirkt sich geräuschdämpfend aus. Entsprechend entspannt sich zu Beginn von Lufttrockner-Regenerationsphasen die in den Räumen des Lufttrockners gespeicherte Druckluft gedämpft zur Atmosphäre, so daß kein Expansionsknall auftritt. Auch die nachfolgend abströmende Regenerationsluft wird entsprechend schallgedämpft. Hervorzuheben ist der dabei geringe, auf die Regenerationsluft wirkende und durch die Dämpfung verursachte Staudruck, wodurch eine gute Entspannung und Trocknung der Regenerationsluft vor dem Einströmen in die Trocknerpatrone 4 sowie eine gute Ausnutzung der Regenerationsluftmenge möglich ist.

Insgesamt ergibt sich somit ein Lufttrockner in billiger und äußerst platzsparender Bauweise, der keine Expansionsknalle verursacht und durch welchen die vom Kompressor geförderte Luft in der Kompressor-Leerlaufphase ruhig und leise zur Atmosphäre abströmen kann, wobei die Abströmöffnung zur Atmosphäre durch eine Entlüftungsleitung an eine beliebige Stelle führbar ist. Ein Zusetzen des über seine gesamte Länge großquerschnittigen Entlüftungsweges erfolgt dabei auch bei längeren Betriebszeiten des Lufttrockners nicht, so daß dessen günstige Eigenschaften erhalten bleiben.

Es ist noch zu erwähnen, daß das Formstück auch mit mehr als drei Wandungsteilen zum Bilden einer entsprechend vermehrten Anzahl von in Serie zueinander geschalteten Kammern versehen sein kann. Auch ist es möglich, das Formstück mehrteilig, beispielsweise mit metallischen Zwischenstücken, und geeignet zur Aufnahme und Halterung einzelner Lufttrockner-Ventil- oder -Bauteile ähnlich wie zur Halterung der Feder 18 geeignet auszubilden.

**Patentansprüche**

1. Lufttrockner für von einem Kompressor aufladbare Druckluftanlagen, insbesondere Druckluftbremsanlagen von Fahrzeugen, mit einer Lufttrocknerpatrone (4) und einem unter dieser befindlichen Gehäuseabschnitt (1) zur Aufnahme von Anschluß-, Steuer- und Ventileinrichtungen sowie eines integrierten Auslaßventils (13) zum Auslaß der vom Kompressor geförderten Luft während der Kompressor-Leerlaufphasen, dadurch gekennzeichnet, daß in dem Gehäuseabschnitt (1) auf der der Lufttrocknerpatrone (4) abgewandten Seite ein Expansionsschalldämpfer angeordnet ist, der in den Strömungsweg zwischen dem Auslaß (17) des Auslaßventils (13) und einem Gehäuseauslaß (Stutzen 34) zur Atmosphäre eingeordnet ist, wobei der Gehäuseabschnitt (1) im Bereich des Expansionsschalldämpfers einen im wesentlichen seiner Außenkontur angepaßten, umlaufenden Wandungsabschnitt (19) aufweist, der einen zur Lufttrocknerpatrone (4) abgewandten Seite hin offenen Raum umschließt, daß der Auslaß (17) des Auslaßventils (13) in diesen Raum mündet und daß in diesem Raum ein Formstück (20) gehaltert ist, das mehrere, in Serie zueinander angeordnete und über Verbindungsstellen (Öffnung 37, Drosselspalt 28) miteinander verbundene Kammern (Räume 38, 39, 35) bildet, in deren erste Kammer (38) der Auslaß (17) einmündet und von deren letzter Kammer (35) der rohrstutzenartig ausgebildete, mit dem Formteil (20) einstückige Gehäuseauslaß (Stutzen 34) ausgeht.

2. Lufttrockner nach Anspruch 1, dadurch gekennzeichnet, daß das Formstück (20) wenigstens drei zueinander etwa parallele und zum Wandungsabschnitt (19) senkrechte Wandungsteile (22, 23, 24) aufweist, die die Kammern (Räume 35, 39) begrenzen, wobei die beiden endseitigen Wandungsteile (22, 24) an ihren Außenumfängen am Wandungsabschnitt (19) anliegen und sich zwischen dem Außenumfang des mittleren Wandungsteils (23) und der Innenfläche (25) des Wandungsabschnittes (19) ein Drosselspalt (28) befindet.

3. Lufttrockner nach Anspruch 2, dadurch gekennzeichnet, daß die Wandungsteile (22, 23, 24) in ihren Zentralbereichen durch einen in das Formstück (20) eingeformten Rohrabschnitt (33) mit zu den Ebenen der Wandungsteile senkrechter Achsrichtung miteinander verbunden sind, wobei der Rohrabschnitt auslaßventilseitig verschlossen und andersseitig offen endet und der Innenraum (41) des Rohrabschnittes durch seine Wandung durchbrechende Öffnungen (36) mit der letzten Kammer (Raum 35) in Verbindung steht.

4. Lufttrockner nach Anspruch 1, 2 oder 3 dadurch gekennzeichnet, daß das Formstück (20) aus Kunststoff besteht.

**Claims**

1. Air drier for compressed air brake installations which can be charged by a compressor, in particular compressed air brake installations of vehicles, having an air drier cartridge (4) and a housing section (1) located underneath this for receiving connection-, control- and valve devices and an integrated discharge valve (13) for the discharge of the air conveyed from the compressor during the compressor-idling phases, characterised in that in the housing section (1) there is arranged on the side remote from the air drier cartridge (4) an expansion silencer which is inserted into the flow path between the outlet (17) of the discharge valve (13) and a housing outlet (connecting piece 34) to the atmosphere, whereby the housing section (1) in the area of the expansion silencer has an encircling wall section (19) substantially adapted to its outer contour, which wall section encloses a space open towards the side remote from the air drier cartridge (4), in that the outlet (17) of the discharge valve (13) opens into this space, and in that in this space there is mounted a moulded piece (20) which forms several chambers (spaces 38, 39, 35) arranged in series with one another and joined together by means of connection points (aperture 37, choke gap 28), in the first chamber (38) of which discharges the outlet (17), and from the last chamber (35) of which extends the housing outlet (connecting piece 34), shaped like a short cylindrical pipe piece and integral with the moulded piece (20).

2. Air drier according to claim 1, characterised in that the moulded piece (20) has at least three wall parts (22, 23, 24) approximately parallel to each other and perpendicular to the wall section (19), which wall parts define the chambers (spaces 35, 39), whereby the two end-side wall parts (22, 24) abut the wall section (19) on their outer circumferences, and between the outer circumference of the central wall part (23) and the inner surface (25) of the wall section (19) there is a choke gap (28).

3. Air drier according to claim 2, characterised in that the wall parts (22, 23, 24) are joined together in their central areas by a pipe section (33) moulded into the moulded piece (20) with an axial direction perpendicular to the planes of the wall parts, whereby the pipe section is closed at the discharge valve side end and is open at the other side end, and the inner space (41) of the pipe section is connected to the last chamber (space 35) by apertures (36) penetrating its wall.

4. Air drier according to claim 1, 2 or 3, characterised in that the moulded piece (20) is of plastics.

## Revendications

1. Dessiccateur d'air pour des installations à air comprimé susceptibles d'être chargées par un compresseur, en particulier pour des installations de freinage à air comprimé, comportant une cartouche de dessiccation de l'air (4) ainsi qu'une section de boîtier (1) située sous cette dernière et servant à recevoir des dispositifs de branchement, de commande et de soupape, de même qu'une soupape d'évacuation intégrée (13) pour l'échappement de l'air refoulé par le compresseur pendant les phases de marche à vide du compresseur, caractérisé par le fait que dans ladite section de boîtier (1), et sur le côté qui est éloigné de la cartouche de dessiccation de l'air (4), est prévu un dispositif de dissipation du son par détente agencé dans la voie de l'écoulement entre l'évacuation (17) de la soupape d'évacuation (13) et une évacuation du boîtier (embout 34) dans l'atmosphère, la section de boîtier (1) présentant, au niveau du dispositif de dissipation du son par détente, une section de paroi (19) de révolution adaptée sensiblement à son contour extérieur et présentant un espace ouvert du côté éloigné de ladite cartouche (4), et que dans cet espace est supportée une pièce conformée (20) qui constitue plusieurs chambres (espaces 38, 39, 35) disposées en série et reliées entre elles par des liaisons (ouverture 37, fente d'étranglement 28), pièce conformée dans la première chambre (38) de laquelle débouche l'évacuation et à partir de la dernière chambre (35) de laquelle s'étend l'évacuation du boîtier (embout 34) se présentant sous la forme d'une tubulure et venue d'une pièce avec la pièce conformée.

2. Dessiccateur d'air selon la revendication 1, caractérisé par le fait que la pièce conformée (20) comporte au moins trois éléments de parois (22, 23, 24) sensiblement parallèles entre eux et perpendiculaires à la section de paroi (19), lesdits éléments de paroi délimitant les chambres (espaces 35, 39), alors que les deux éléments de parois d'extrémité (22, 24) portent, par leurs périphéries extérieures contre la section de paroi (19) et qu'entre la périphérie extérieure de l'élément de paroi médian (23) et la surface intérieure (25) de la section de paroi (19), se trouve une fente d'étranglement (28).

3. Dessiccateur d'air selon la revendication 2, caractérisé par le fait que les éléments de paroi (22, 23, 24) sont reliés entre eux, au niveau de leurs zones centrales, par une section tubulaire (33) formée dans la pièce conformée (20), avec sa direction axiale perpendiculaire aux plans des éléments de paroi, ladite section tubulaire étant obturée du côté de la soupape d'évacuation et se terminant ouverte de l'autre côté, alors que l'espace intérieur (41) de la section tubulaire est relié à la dernière chambre (espace 35) à l'aide d'ouvertures traversantes (36) ménagées dans la paroi de la section tubulaire.

4. Dessiccateur d'air selon la revendication 1, 2 ou 3, caractérisé par le fait que la pièce conformée (20) est faite avec une matière plastique.

Figur 1

Figur 2